# EUROPEAN PATENT SPECIFICATION

(11) **EP 2 261 061 B1**
(45) Date of publication and mention of the grant of the patent: **02.05.2018**
(21) Application number: 09722544.5
(22) Date of filing: 19.03.2009
(51) Int. Cl.: B60C 11/00, B60C 11/12, B60C 11/16

(54) **Snow Tire**
Schnee-Reifen
Pneu de neige

(30) Priority: 19.03.2008 JP 2008071688
(43) Date of publication of application: 15.12.2010
(73) Proprietor: Kabushiki Kaisha Bridgestone, Tokyo 104-8340 (JP)
(72) Inventor: YAMAMOTO, Tomomichi, Kodaira-shi Tokyo 187-8531 (JP); HASHIMOTO, Kento, Kodaira-shi Tokyo 187-8531 (JP)
(74) Representative: Oxley, Robin John George
(86) International application number: PCT/JP2009/055428
(87) International publication number: WO 2009/116623

(56) References cited:
- DE-A1- 4 208 861
- JP-A- 59 199 307
- JP-A- 2009 023 602
- US-B1- 6 374 886

## Description

### TECHNICAL FIELD

The present invention relates to a pneumatic tire and, more particularly, to a winter tire having sipes and studs in the land portions of the tread.

### BACKGROUND ART

There are studded tires, known as winter tires, which have sipes in the land portions of the tread and studs driven into the land portions having sipes formed therein. The tread of such a studded tire is provided with a cap layer disposed on the tire surface and a base layer disposed on the radially inner side thereof. A rubber of a lower Shore A hardness is used for the cap layer, and a rubber of a higher Shore A hardness for the base layer. One end of the stud protrudes from the surface of the cap layer, and the other end thereof is embedded 1/3 or more in the base layer. When a vehicle fitted with studded tires runs on a snowy or icy road, the tips of the studs bite into the snow or ice on the road surface, and the land portions with sipes formed therein make a closer contact with the road surface. This will increase the friction force in the contact area, thus ensuring the steering stability of the vehicle on the snowy or icy road. Also, use of a rubber of a lower Shore A hardness for the cap layer, which is the surface layer, makes it easier for sipes to open, and the edge effect ensures the traction performance on the snow. On the other hand, use of a rubber of a higher Shore A hardness for the base layer assures not only the retention of the studs and the rigidity of the tread, thereby improving the steering stability of the vehicle (see Reference 1, for instance). Reference 1: Japanese Unexamined Patent Application Publication No. 60-259504.
Attention is drawn to the disclosure of US 6,374,886 disclosing the preamble of claim 1.

### DISCLOSURE OF THE INVENTION

### PROBLEMS TO BE SOLVED BY THE INVENTION

However, when the thickness of the base layer with the studs embedded therein is thicker than the cap layer, the tread as a whole tends to have a greater rigidity. And this makes it difficult for the sipes to open and thus poses a problem of a loss of traction performance on the snow.

The present invention has been made in view of this problem of the conventional art, and an object thereof is to provide a winter tire that can improve the traction performance of a vehicle on the snow.

### MEANS FOR SOLVING THE PROBLEM

In a first aspect of the present invention, a winter tire is provided according to claim 1.
In a first aspect of the present invention, a winte is provided, according to claim 1.

In a second aspect of the present invention, the winter tire may be such that the Shore A hardness of the rubber constituting the inner layer is 2 points or more higher than the Shore A hardness of the rubber constituting the surface layer. Note that the Shore A hardness, which is an indicator of the hardness of tread rubber, is the hardness (rebound hardness) determined by the bouncing height of a steel ball or a diamond ball dropped to the surface of the material. The greater the value, the harder the material is. This Shore A hardness can be measured with a commercially available hardness tester.

In a third aspect of the present invention, the winter tire may be such that the Shore A hardness of the rubber constituting the surface layer is within a range of 50 to 56.

### EFFECT OF THE INVENTION

According to the present invention, the winter tire has sipes in the land portions defined by a plurality of grooves formed on the tread surface. The tread consists of a surface layer disposed on the tire surface side of it and an inner layer disposed on the radially inner side of the surface layer. And the inner layer is formed of a rubber having a greater hardness than that of a rubber constituting the surface layer. At the same time, the surface layer is so formed as to be thicker in the tread center region than in the tread shoulder regions. Thus, it is made easier for the sipes to open in the tread center region, which improves the traction performance of the tire on the snow. Also, studs may be driven into the land portions such that one end of each stud protrudes from the surface of the surface layer and the other end reaches the inner layer or reaches into the interior of the inner layer. In consequence, the falling out of the studs can be prevented while ensuring the traction performance of the tire on the snow.

Also, if the studs are provided only in the tread shoulder regions where the surface layer is thinner, then the Shore A hardness of the rubber constituting the surface layer can be made even smaller because there is no risk of the studs falling out. Thus, the edge effect will be enhanced with the sipes opening more easily, and the traction performance of the tire on the snow will be further improved.

At the same time, a rubber having a Shore A hardness 2 points of more higher than the rubber constituting the surface layer may be used as the rubber constituting the inner layer. Then it will be more reliably made easier for the sipes to open in the tread center region.

Also, the Shore A hardness of the rubber constituting the surface layer is preferably in the range of 50 to 56, which allows the sipes to open easily. This will help enhance the traction performance of the tire on the snow.

### BRIEF DESCRIPTION OF THE DRAWINGS

FIG. 1 is an illustration showing a structure of a pneumatic tire according to a preferred embodiment (best mode) of the present invention.
FIG. 2 is illustrations for explaining the relationship between the placement of a stud and the likelihood of its falling out.
FIG. 3 is a table showing the results of a test of snowy road performance.

### REFERENCE NUMERALS

- 10: pneumatic tire
- 10A: tread center region
- 10B: tread shoulder region
- 11: bead region
- 11C: bead core
- 12: carcass layer
- 13a, 13b: belt layer
- 14: tread
- 15: side tread
- 16: groove
- 17: land portion
- 18: sipe
- 19: stud
- 21: surface layer
- 22: inner layer

### BEST MODE FOR CARRYING OUT THE INVENTION

Preferred embodiments of the present invention will be described hereinbelow with reference to the accompanying drawings. The preferred embodiments do not intend to limit the scope of the present invention, but to exemplify the invention.

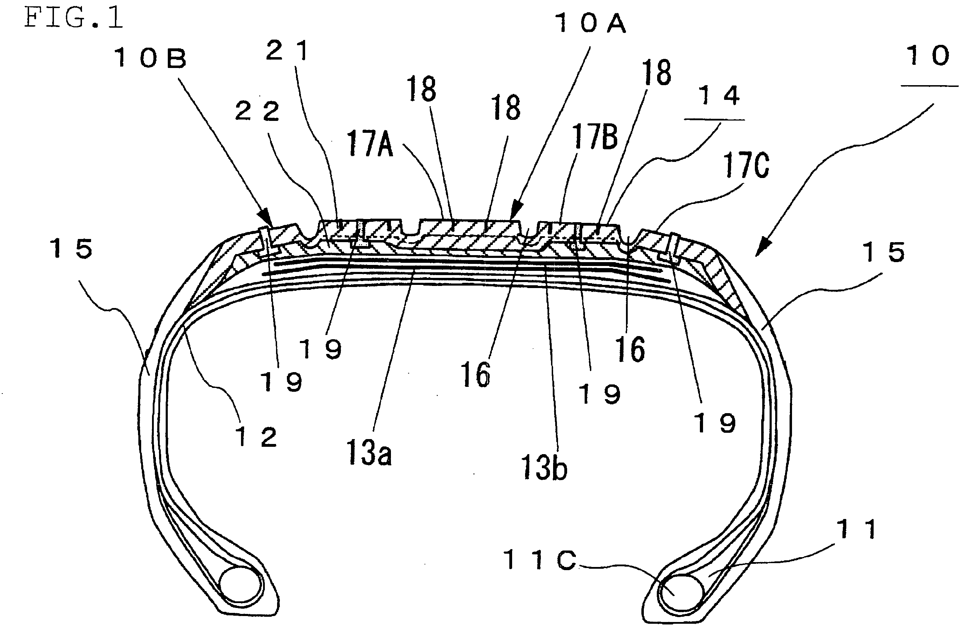

FIG. 1 is a cross section showing a structure of a winter tire 10 according to the preferred embodiments (best mode). In the figure, reference numeral 11 denotes a bead region, 11C a bead core, 12 carcass layer, 13a, 13b belt layers, 14 a tread, and 15 a side tread.

The carcass layer 12, which is a structural member of a pneumatic tire 10, is so provided as to straddle a pair of bead cores 11C, which are disposed in the bead regions 11, in a toroidal form. Disposed on the radially outer side in the crown part of the carcass layer 12 are two belt layers 13a and 13b. The belt layers 13a and 13b are each so disposed that the steel cords or the cords of organic fibers stranded together cross each other at angles of 20 to 70 degrees with respect to the equator of the tire. The extended direction of the cord of the belt layer 13a disposed on the radially inner side and the extended direction of the cord of the belt layer 13b disposed on the radially outer side cross each other.

The tread 14 is a rubber member (tread rubber) disposed on the radially outer side of the belt layers 13a and 13b. A plurality of grooves 16 are formed on the surface of the tread 14, and a plurality of land portions 17A, 17B, and 17C are defined by these grooves 16. The land portion 17A is a central land portion located in the tread center region 10A. The land portions 17B are outer land portions located on both axially outer sides of the central land portion. The land portions 12C are each a shoulder land portion located on the axially outer side of the outer land portion 17B in the tread shoulder region 10B. The above-mentioned land portions 17A, 17B, and 17C have a plurality of sipes 18 formed on the surface thereof, and the land portions 17B and 17C, with the exception of the central land portion 17A, have a plurality of studs 19 driven therein.

The side treads 15 are each a rubber member covering the carcass layer 12 by extending from the end of the tread 14 to the sidewall region.

The tread 14 has a surface layer 21 disposed on the tire surface side and an inner layer 22 disposed on the radially inner side of the surface layer 21. The surface layer 21 is formed of a rubber having a Shore A hardness of 50 to 56, and the inner layer 22 is formed of a rubber having a Shore A hardness 2 points greater than that of the rubber constituting the surface layer. The thickness of the tread 14, which is the total of the thickness of the surface layer 21 and the thickness of the inner layer 22, is substantially constant. For a conventional tread, the thickness of the surface layer 21 is nearly equal to the thickness of the inner layer 22 as is indicated by the broken line in FIG. 1. In the present embodiment, however, the surface layer 21 is thicker in the tread center region 10 and thinner in the tread shoulder regions 10B.

The sipes 18, which are so formed in the land portions 17A, 17B, and 17C as to extend along the tire circumferential direction, are narrower and shallower than the grooves 16. It is to be noted that there are also not-shown sipes extending in the tire axial direction in the land portions 17.

The studs 19 are placed in the land portions 17B and 17C of the tread 14 such that they extend in the radial direction of the tire with the radially outer end thereof protruding from the surface of the surface layer 21. Also, the radially inner end thereof is embedded in the inner layer 22 in the tread shoulder regions 10B.

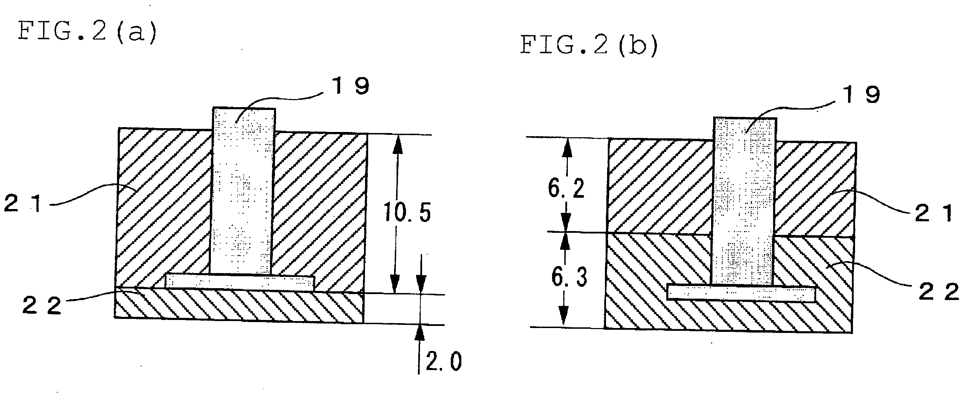

Where the hardness of the rubber constituting the inner layer 22 is higher than that of the rubber constituting the surface layer 21, the studs 19 are less likely to fall out when the inner layer 22 is thicker. For example, the force for pulling out a stud 19 was 21.8 kN when the tread was 12.5 mm thick, the surface layer 21 was 10. 5 mm thick, and the inner layer 22 was 2.0 mm thick as shown in FIG. 2A. On the other hand, the force for pulling out a stud 19 was 24.1 kN, about 11% larger, when the surface layer 21 was 6.2 mm thick and the inner layer 22 was 6.3 mm thick as shown in FIG. 2B.

In contrast to this, performance the tire on the snowy road (steering stability, driving and braking characteristics) will improve if the surface layer 21 made of a rubber having a lower hardness is thicker. This is because the lower hardness of the rubber of the surface layer 21 makes it easier for the sipes 18 to open and consequently the edge effect ensures the traction performance on the snow.

The pneumatic tire 10 of the present embodiment features superior steering stability and driving and braking characteristics on the snow because the surface layer 21 made of a rubber having a lower hardness is thicker in the tread center region 10A.

On the other hand, the tread shoulder region 10B has more to do with the cornering performance, such as the gripping force at cornering and the like, than with the steering stability and driving and braking characteristics on the snow. In the present embodiment, therefore, the rigidity of the tire is ensured by the use of the inner layer 22 made of a rubber with a higher hardness which is thicker in the tread shoulder regions 10B than in the tread center region 10A. In the present embodiment, the studs 19 are disposed in the outer land portions 17B and the shoulder land portions 17C, which have more to do with the cornering performance such as the gripping force at cornering. The inner layer 22 is somewhat thicker in the outer land portions 17B and the shoulder land portions 17C. Therefore, the studs 19 can be held fast within the inner layer 22 without their falling out.

It is to be noted that in the tread center region 10A, where the surface layer 21 made of a rubber with a lower hardness is thicker, good grip is provided to ensure sufficient performance on the snowy road without the presence of the studs 19.

According to the preferred embodiment (best mode) of the present invention, therefore, the tread 14 is constituted by a surface layer 21, which is formed of a rubber having a Shore A hardness of 50 to 56, and an inner layer 22, which is formed of a rubber having a Shore A hardness 2 points greater than that of the rubber of the surface layer 21. Further, the surface layer 21 is so formed that it is thicker in the tread center region 10A than in the tread shoulder regions 10B. Thus, it is made easier for the sipes 18 to open in the tread center region 10A, and the rigidity is ensured in the tread shoulder regions 10B, which improves the traction performance of the tire on the snow.

Also, the studs 19 are disposed in the outer land portions 17B and the shoulder land portions 17C, where the inner layer 22 is somewhat thicker. As a result, the studs 19 can be held fast, and the cornering performance such as the gripping force at cornering can be improved.

It should be noted that in the above-described preferred embodiment, the studs 19 are disposed in both of the outer land portions 17B and the shoulder land portions 17C, but they may be disposed in the shoulder land portions 17C only. This will increase the region where the surface layer 21 is thick, which will make it even easier for the sipes to open and thus improve the traction performance of the tire on the snow.

Also, in the above-described embodiment, the sipes 18 formed in the land portions 17A, 17B, and 17C are ones extending along the circumferential direction of the tire (circumferential sipes). However, the sipes to be formed in the land portions 17A, 17B, and 17C may be lateral sipes which so extend as to intersect with the circumferential direction of the tire. Or the arrangement may be such that both the circumferential sipes and lateral sipes are formed.

Also, in the above-described embodiment, the Shore A hardness of the rubber constituting the inner layer 22 is 2 points higher than the hardness of the rubber constituting the surface layer 21. However, how much it is higher than the latter is not limited to 2 points. It may be determined as appropriate depending on the type of tire as represented by the tread pattern or the thickness of the tread 14.

### Example

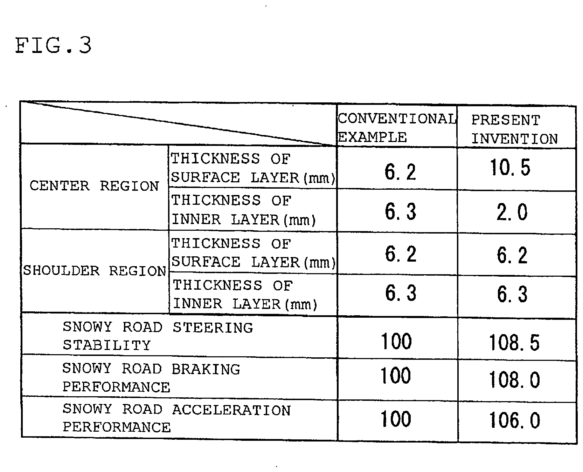

A tire according to the present invention having a surface layer made of a rubber with a lower Shore A hardness which is thicker in the tread center region 10A and thinner in the tread shoulder regions 10B (Present Invention) and a conventional tire having a surface layer which is constant in thickness (Conventional Example) were prepared. FIG. 3 shows the results of a test of snowy road performance of those tires mounted on a test vehicle. Note that for the tire of the Present Invention, the surface layer was 10.5 mm thick and the inner layer 2.0 mm thick in the tread center region, whereas the surface layer was 6.2 mm thick and the inner layer 6. 3 mm thick in the tread shoulder regions. On the other hand, for the tire of the Conventional Example, the surface layer was 6.2 mm thick and the inner layer 6.3 mm thick in both the tread center region and tread shoulder regions. Also, the size of the tires tested was 195/65R15, the rim used was 6.5J, and the internal pressure was 240 kPa.

The methods for testing and evaluation used in the snowy road performance test were as follows:
The snowy road steering stability is evaluated by the driver's feeling as the driver operates a test vehicle fitted with the tires of the present invention or the conventional tires on the snow. The evaluation is done by an index relative to the value of "100" of the Conventional Example. The higher the value of evaluation, the better the performance is.

The snowy road braking performance is evaluated by measuring the time (deceleration time) taken by a vehicle to decelerate to a speed of 5 km/h when the vehicle running at 30 km/h on the snow is braked. The evaluation is done by an index relative to the value "100" of the Conventional Example. The higher the value of evaluation, the shorter the deceleration time and therefore the better the braking performance is.

The snowy road acceleration performance is evaluated by measuring the time (acceleration time) taken by a vehicle to reach a speed of 35 km/h when the vehicle running at 10 km/h on the snow is accelerated. The evaluation is done by an index relative to the value of "100" of the Conventional Example. The higher the value of evaluation, the shorter the acceleration time and therefore the better the acceleration performance is.

It has been confirmed that, as is clear from the table of FIG. 3, the tire according to the present invention having a surface layer of a rubber with a lower Shore A hardness, which is thicker in the tread center region, displays a higher snowy road performance.

As described above, the present invention provides a winter tire that improves traction performance on the snow while ensuring the retention of the studs. Therefore, the safety of vehicular operation can be enhanced.

It should be understood by those skilled in the art that various modifications and variations can be made to this invention without departing from the scope of the invention. For example, specific constituent members described herein may take all kinds of form or configuration. Accordingly, the invention is intended to include all such modifications and variations as fall within the scope of the appended claims.

## Claims

1. A winter tire (10) comprising a tread (14), the tread having:
a plurality of grooves (16) formed on a surface thereof;
land portions (17A, 17B, 17C) defined by the grooves; and
studs (19) embedded in the land portions,
wherein the tread comprises a surface layer (21) disposed on a tire surface side thereof and an inner layer (22) disposed on a radially inner side of the surface layer,
wherein a hardness of a rubber constituting the inner layer is higher than a hardness of a rubber constituting the surface layer, and **characterized in that**:
the tread has sipes (18) formed in the land portions;
the surface layer in a tread center region is formed thicker than the surface layer in tread shoulder regions, and
the studs are each embedded in the land portions (17C) in the tread shoulder regions only such that one end thereof protrudes from a surface of the surface layer and the other end thereof reaches into the interior of the inner layer.

2. The winter tire according to claim 1, wherein a Shore A hardness of the rubber constituting the inner layer is 2 points or more higher than a Shore A hardness of the rubber constituting the surface layer.

3. The winter tire according to claim 1 or claim 2, wherein the Shore A hardness of the rubber constituting the surface layer is within a range of 50 to 56.

## Patentansprüche

1. Winterreifen (10) umfassend eine Lauffläche (14), wobei die Lauffläche aufweist:
eine Mehrzahl von Rillen (16), welche auf einer Oberfläche derselben gebildet ist;
Stegabschnitte (17A, 17B, 17C), welche von den Rillen definiert sind; und
Zapfen (19), welche in den Stegabschnitten eingebettet sind,
wobei die Lauffläche eine Oberflächenschicht (21), welche auf einer Reifenoberflächenseite derselben angeordnet ist, und eine innere Schicht (22) umfasst, welche auf einer radial inneren Seite der Oberflächenschicht angeordnet ist,
wobei die Härte eines Gummis, welches die innere Schicht bildet, größer ist als die Härte eines Gummis, welches die Oberflächenschicht bildet, und **dadurch gekennzeichnet, dass**:
die Lauffläche Lamellen (18) aufweist, welche in den Stegabschnitten gebildet sind;
wobei die Oberflächenschicht in einem zentralen Bereich der Lauffläche dicker ausgebildet ist als die Oberflächenschicht in Schulterbereichen der Lauffläche, und
wobei die Zapfen jeweils nur in den Stegabschnitten (17C) in den Laufflächenschulterbereichen eingebettet sind, sodass ein Ende derselben aus einer Oberfläche der Oberflächenschicht vorsteht und das andere Ende derselben in das Innere der inneren Schicht reicht.

2. Winterreifen nach Anspruch 1, wobei eine Shore-A-Härte des Gummis, welches die innere Schicht bildet, 2 Punkte oder mehr größer ist als die Shore-A-Härte des Gummis, welches die Oberflächenschicht bildet.

3. Winterreifen nach Anspruch 1 oder 2, wobei die Shore-A-Härte des Gummis, welches die Oberflächenschicht bildet, innerhalb eines Bereichs zwischen 50 und 56 liegt.

## Revendications

1. Bandage pneumatique d'hiver (10), comprenant une bande de roulement (14), la bande de roulement comportant :
plusieurs rainures (16) formées sur sa surface ;
des parties d'appui (17A, 17B, 17C) définies par les rainures ; et
des crampons (19) noyés dans les parties d'appui ;
dans lequel la bande de roulement comprend une couche de surface (21) disposée sur un côté de surface du bandage pneumatique de celle-ci, et une couche interne (22) disposée sur un côté radialement interne de la couche de surface ;
dans lequel une dureté du caoutchouc constituant la couche interne est supérieure à une dureté d'un caoutchouc constituant la couche de surface, et **caractérisé en ce que** :
la bande de roulement comporte des lamelles (18) formées dans les parties d'appui ;
la couche de surface est, dans une région centrale de la bande de roulement, plus épaisse que la couche de surface dans des régions d'épaulement de la bande de roulement ; et
les crampons sont chacun noyés dans les parties d'appui (17C), uniquement dans les régions d'épaulement de la bande de roulement, de sorte qu'une de leurs extrémités déborde d'une surface de la couche de surface, l'autre de leurs extrémités atteignant l'intérieur de la couche interne.

2. Bandage pneumatique d'hiver selon la revendication 1, dans lequel une dureté Shore A du caoutchouc constituant la couche interne dépasse de 2 points ou plus une dureté Shore A du caoutchouc constituant la couche de surface.

3. Bandage pneumatique d'hiver selon les revendications 1 ou 2, dans lequel la dureté Shore A du caoutchouc constituant la couche de surface est comprise dans un intervalle allant de 50 à 56.
